# EUROPEAN PATENT APPLICATION

(11) **EP 0 526 761 A2**
(43) Date of publication of application: **10.02.1993**
(21) Application number: 92111747.9
(22) Date of filing: 10.07.1992
(51) Int. Cl.: A23C 19/082, A23C 19/09, A21D 2/26, A23L 1/19

(54) **Flowable cream composition**

(30) Priority: 11.07.1991 JP 198747/91
(71) Applicant: N.V. VANDEMOORTELE INTERNATIONAL, B-8500 Kortrijk (BE)
(72) Inventor: Hiroyuki, Sano, Kishiwada-shi, Osaka (JP); Norio, Sawamura, Hashimoto-shi, Wakayama (JP)

(57) **Abstract**

In kneading a cheese composition into foods such as cakes to impart cheese flavor to the foods, the kneading procedure can be readily performed whereby the cheese composition can be uniformly kneaded into the foods. At the same time, the emulsified state of the cheese composition becomes stable and the products are free of exudation of the oils and fats contained in the cheese composition and free of unevenness in baking when baked. Also where steamed cakes are prepared, the cakes are free of poor expansion and are excellent in volume and texture. Thus, foods having excellent cheese flavor can be obtained.

The flowable cream composition comprises at least cheese materials, water and salts, which are homogeneously emulsified and sterilized to form an oil-in-water emulsion.

## Description

### Background of the invention

The present invention relates to flowable cream compositions which are added to food such as cakes and more particularly, to flowable cream compositions which are used to impart cheese flavor to food as described above.

In recent years, it is often attempted to impart cheese flavor to various foodstuffs such as cakes. In order to impart cheese flavor to these various foods in the prior art, cheese such as natural cheese, field cheese, imitation cheese, etc. has been kneaded into food materials generally at a step of preparing these foods. For this purpose, paste, block or powdery cheese has been generally used for kneading it into foods.

In general, however, cheese in such a form is blended with other food materials only with difficulty, resulting in a problem that it was impossible to uniformly knead cheese into foods. Also where cheese such as natural cheese having a weak emulsifying ability is used, oils and fats contained in cheese gradually exudates out of the food into which cheese is kneaded so that flavor of texture of the food is deteriorated to reduce its commercial value. When such food kneaded with cheese is baked, the food might be baked unevenly. Further when these cheese materials are used to prepare a steamed cake, the cake expand poorly and hence, lacks a volume and results in poor texture.

In the case of powdery cheese, it is necessary to dry cheese to render cheese powdery. This procedure results in higher costs than other paste of block cheese.

### Object of the invention

An object of the present invention is to solve the foregoing problems encountered in the case of imparting cheese flavor to foods such as cakes. That is, the present invention aims at kneading cheese into food readily and uniformly thereby to impart cheese flavor to food such as cake and provide food having a stably emulsified state of cheese, free of problems that oils and fats contained in cheese come out of the food to deteriorate flavor and texture of the food and the food is baked unevenly when baked, and even in the case of preparing a steamed cake, provide food free of poor expansion but having an excellent cheese flavor in volume or texture.

### Detailed description of the invention

In order to solve the foregoing problems, in the present invention there is developed a flowable cream composition comprising at least cheese, water and a salt, which are homogeneously emulsified and sterilized to form an oil-in-water emulsion.

As the cheese used in the flowable cream composition of the present invention, there may be used natural cheese such as hard Parmesan cheese, Cheddar cheese, Gouda cheese, cream cheese, etc.; processed cheese, cheese food, field cheese, imitation cheese obtained by blending various oils and fats with milk protein while heating, and the like. Particularly in view of flavor or strenght, it is preferred to use Cheddar cheese, Gouda cheese, Edam cheese, etc. ripened to a certain extent.

Where flowable cream composition is prepared using these cheese materials, low content of cheese results in failure to impart cheese flavor to food when added to food, though it depends upon kind of cheese used. On the other hand, where the content is too high, flowability becomes worse. Therefore, it is generally suitable to use 10 to 70 wt%, preferably 20 to 50wt %, based on the total weight of materials used to prepare a flowable cream composition.

In the flowable cream composition of the present invention, where the content is water is low, flowability of this flowable cream composition becomes poor. On the other hand, where the amount of water added is too much, flavor tends to be lost. Therefore, water is added generally in a proportion of 50 to 80 wt% based on the total weight of this flowable cream composition.

As salts used in this flowable cream composition, it is preferred to use citrates or phosphates which are molten or fused salts, whereby the aforesaid cheese is sufficiently emulsified. Upon addition of such salts, where the amount of the salts is too small, cheese is sparingly emulsified. On the other hand, where the amount is too large, the resulting flowable cream composition tends to loose its flavor. It is therefore preferred to add these salts generally in an amount of 0.01 to 2 wt%.

In order to impart milky flavor to the flowable cream composition, a small amount of fat-free milk solid may be added to the flowable cream composition.

In preparing the flowable cream composition, oils and fats and other emulsifiers may also be added to improve its flavor and emulsifiability.

As the emulsifier, there may be used lecithin, glycerine fatty acid esters, propionic fatty acid esters, sorbitan fatty acid esters, etc. Where these emulsifiers are added to the flowable cream composition, it is preferred to add the emulsifiers generally in an amount of 0.01 to 1 wt % thereby to avoid an undesired odor of the emulsifier.

Where oils and fats are added too much, flowability after homogenization becomes poor or demulsification occurs during storage to make it impossible to obtain a stable emulsion. Therefore, it is preferred to control the oil content generally in an amount not greater than 45 wt % based on the total weight.

In the present invention, sterilization if preferably performed by high temperature short time sterilization thereby to minimize denaturation of protein contained in cheese.

In the flowable cream composition in accordance with the present invention, cheese, water and salts are used in such a flowable state that these materials are homogenized and emulsified, as stated above. Therefore, there is no need to dry the materials, as required in cheese powders so that the product can be prepared at low costs. Further where these materials are kneaded into food such as cakes, the materials are readily blended with these food materials to uniformly knead into these food materials.

In the flowable cream composition, the cheese is maintained in an emulsified state that is more stabilized by the salts. Therefore, where the flowable cream composition is kneaded into the food, there is no fear that the oils and fats contained in the cheese might exude out to deteriorate flavor or texture of the food. Also where the food is baked, the food is free of unevenness in baking. Further where the flowable cream composition is used in preparing steamed cakes, the cakes are free of poor expansion so that the cakes having cheese flavor and excellent volume and texture can be obtained.

In the flowable cream composition in accordance with the present invention, storability of the cream itself is good because of sterilization so that the food kneaded with this flowable cream composition has good storability.

Hereafter the present invention is described specifically with reference to the following examples of the flowable cream composition.

### Example 1

In this example, the flowable cream composition was prepared using 10 parts by weight of commercially available cream cheese, 30 parts by weight of Edam cheese, 3 parts by weight of skimmed milk, 50 parts by weight of water, 7 parts by weight of vegetable oils and fats, 0.2 part by weight of sodium citrate and 0.3 part by weight of sodium tripolyphosphate.

These materials were stirred at a high speed while heating at 70°C to thoroughly mix the cheese materials described above. Thereafter, the mixture was sterilized at 144°C for 4 seconds by means of a direct heat sterilizer.

Then, the thus sterilized mixture was homogenized with a homogenizer under 20 kg/cm2. The resulting homogenate was cooled to 7°C with a plate cooler.

The thus obtained product showed flowability and had a good cheese flavor.

### Example 2

In this example, the flowable cream composition was prepared using 20 parts by weight of commercially available Cheddar cheese, 10 parts by weight of Edam cheese, 15 parts by weight of processed cheese (manufactured by Snow Brand Co., Ltd.), 15 parts by weight of milk, 40 parts by weight of water, 1.0 part by weight of sodium diphosphate (12 hydrate) and 0.5 part by weight of sodium tripoly-phosphate.

These materials were stirred at a high speed while heating at 70°C to thoroughly mix the cheese materials described above. Thereafter, the mixture was sterilized at 138°C for 10 seconds by means of an indirect heat sterilizer.

Then, the thus sterilized mixture was homogenized with a homogenizer under 40 kg/cm2. The resulting homogenate was cooled to 7°C with a plate cooler.

The thus obtained product showed flowability and had a good cheese flavor, as in the product obtained in Example 1 described above.

### Example 3

In this example, the flowable cream composition was prepared using 40 parts by weight of cream cheese-like imitation cheese (manufactured by Fuji Oil Co., Ltd., KUVARU D20), 10 parts by weight of block imitation cheese (manufactured by Fuji Oil Co., Ltd., KUVARU HIGH MELT BLOCK), 10 parts by weight of Cheddar cheese, 20 parts by weight of water, 0.3 part by weight of sodium hexametaphosphate and 0.5 part by weight of sodium tripolyphosphate.

These materials were stirred at a high speed while heating at 70°C to thoroughly mix and fully melt the cheese materials described above. Thereafter, the mixture was sterilized and homogenized in a manner similar to Example 1 described above. Then, the thus homogenized mixture was immediately cooled to 7°C with a plate cooler.

The thus obtained product showed flowability and had a good cheese flavor, as in the product obtained in Examples 1 and 2 described above.

Next, using the flowable cream compositions prepared as described above, a steamed cheese cake, a cheese castilla, MÜRBEBETEIG (cookies), souffle flavor iced candy were prepared. The details are described below.

Preparation of steamed cake :
In preparing a steamed cake, 100 g of whole egg, 90 g of refined sugar, 20 g of liquid sugar, 0.6 g of table salt and 15 g of emulsified oils and fats (manufactured by Fuji Oil Co., Ltd., "PALMING H") were whipped. Then 100 g of soft flour, 0.5 g of baking powderand 3 g of starch were added to the whipped mixture to continue further whipping. Thereafter 30 g of liquid shortening (manufactured by Fuji Oil Co., Ltd., "PALMING L"), 30 g of the flowable cream composition obtained in Example 1 described above and 1 g of cheese flavor, which had been decocted, were added to the whipped mixture to keep further whipping. The thus whipped mixture was steamed for about 13 minutes to prepare a steamed cheese cake.

In the thus prepared steamed cheese cake, the cheese contained in the flowable cream composition described above was uniformly dispersed therein. The steamed cheese cake was free of exudation of the oils and fats contained in the cheese, had sufficient expansion and had satisfactory texture.

Preparation of cheese castilla :
In preparing cheese castilla, 600 g of refined sugar, 50 g of rice sugar, 625 g of whole egg and 75 g of emulsified oils and fats (manufactured by Fuji Oil Co., Ltd., "PALMING H") were blended with each other at a low speed of 150 rpm. The blend was further mixed at a high speed of 300 rpm for a minute and then at a higher of 500 rpm for a minute. Then 350 g of soft flour, 150 g of hard flour and 7.5 g of baking powder were blended with the above mixture at a low speed of 150 rpm and then at a high speed of 300 rpm for 1 to 2 minutes. Thereafter 500 g of the flowable cream composition obtained in Example 1 described above and 50 g of margarine (manufactured by Fuji Oil Co., Ltd., "CONBOL V"), which had been melted in a hot bath, were added to the aforesaid mixture to gently mix them. Then 25 cc of lemon juice and lemon peel corresponding to one lemon were added to the mixture. The mixture was further mixed at a low speed of 150 rpm and then at a medium speed of 200 rpm for about one minute to prepare a dough for cheese castilla. The dough was poored into a wood frame and baked for 20 minutes and then covered with an iron plate followed by baking for 15 minutes. After degasification, baking was continued for further 10 minutes. Lastly, in order to impart a baking color to the castilla, the iron plate was withdrawn and baking was performed for 10 minutes.

Where the cheese castilla was prepared as described above, the cheese was uniformly blended therein and at the same time, the resulting cheese castilla was free of exudation of the oils and fats contained in the cheese and occurrence of unevenness in baking.

Preparation of MÜRBETEIG
In preparing MÜRBETEIG, 42 g of soft flour, 27 parts by weight of margarine (manufactured by Fuji Oil Co., Ltd., "CONBOL V"), 14 parts by weight of sugar, 8 parts by weight of whole egg, 9 parts by weight of the flowable cream composition obtained in Example 1 described above and 50 g of margarine (manufactured by Fuji oil Co., Ltd., "CONBOL V") and 0.03 part by weight of baking powder were used as raw materials. In preparing MÜRBETEIG using the raw materials described above, margarine and sugar were firstly blended in a beater and the whole egg was further added to the blend to further blend with each other. The flowable cream composition obtained in Example 1 described above was added to the blend, and the soft flour and baking powder were added thereto and mixed to prepare a dough for MÜRBETEIG. The dough was molded into a given shape and baked for 10 to 15 minutes at 180°C to prepare MÜRBETEIG.

Where MÜRBETEIG was prepared as described above, the cheese was uniformly blended therein and at the same time, the resulting MÜRBETEIG was free of exudation of the oils and fats contained in the cheese and occurrence of unevenness in baking.

Preparation of souffle flavor iced candy :
In preparing souffle flavor iced candy, 5 parts by weight of sweetened condensed milk, 8 parts by weight of granulated sugar, 21 parts by weight of liquid cream (manufactured by Fuji Oil Co., Ltd., "FUJI SUNNY PRO-VEST 500"), 46 parts by weight of water, 20 parts by weight of the flowable cream obtained in Example 1 described above and 0.3 part by weight of gelatin were used as raw materials. In preparing souffle flavor iced candy using the raw materials described above, water was added to gelatin to swell the gelatin to a volume of 3 times that of the original one and the liquid cream described above was added to the swollen gelatin to dissolve the gelatin at 40°C. Then the resulting solution was cooled to 27°C. Then, the solution was added to the remaining raw materials, while blending the raw materials with a homomixer thereby mixing them. After the mixture was homogenized with a homogenizer under 20 kg/cm2, the resulting homogenate was filled in a mold and cooled to -15°C to prepare a souffle flavor iced candy. The cheese was uniformly mixed also in the thus prepared souffle flavor iced candy and neither oils nor fats in the cheese exude out.

As described above in detail, the flowable cream composition in accordance with the present invention is composed of oil-in-water emulsion obtained by homogenizing and emulsifying a composition comprising at least cheese materials, fat-free milk solids, water and salts followed by sterilization so that there is no need to dry as required in the case of cheese powders and the flowable cream composition can be prepared at low costs. Further where the flowable cream composition is kneaded into foods such as cakes, the flowable cream composition can be readily blended with these food materials and uniformly kneaded in these food materials.

In the flowable cream composition, the cheese is maintained in a more stable emulsified state by the salts so that even though the flowable cream composition is kneaded into food, there is no fear that the oils and fats contained in the cheese composition might exude out to deteriorate the flavor or texture of the food. Also where baked, the food is free of unevenness in baking. Further where the flowable cream composition is used in preparing a steamed cake, the cake is free of poor expansion. Thus, the cheese flavor food having excellent volume and texture can be provided.

The flowable cream composition of the present invention is sterilized as described above so that storability of the cream itself is good, which results in good storability of the food in which the flowable cream composition has been kneaded.

## Claims

1. A flowable cream composition composed of an oil-in-water emulsion comprising at least a cheese material, water and a salt, in a homogenized and sterilized state.

2. A flowable cream composition as claimed in claim 1, wherein said cheese material is contained in said flowable cream composition in an amount of 10 to 70 wt%.

3. A flowable cream composition as claimed in claim 2, wherein said cheese material is contained in said flowable cream composition in an amount of 20 to 50 wt %.

4. A flowable cream composition as claimed in any one of claims 1 and 2, wherein water is contained in said flowable cream composition in an amount of 50 to 80 wt %.

5. A flowable cream composition as claimed in any one of claims 1 and 2, wherein said salt is contained in said flowable cream composition in an amount of 0.01 to 2 wt %.

6. A flowable cream composition as claimed in any one of claims 1 through 4, which further contains an emulsifier.

7. A flowable cream composition as claimed in claim 6, wherein said emulsifier in said flowable cream composition is contained in an amount of 0.01 to 1 wt %.

8. A flowable cream composition as claimed in any one of claims 1 through 6, wherein said sterilization is by way of high temperature short time sterilization.

9. Use of a flowable cream composition as claimed in any of the above claims, for preparing cheese flavoured bakery products.

10. Cheese flavoured bakery products comprising a flowable cream composition according to any of the above claims 1 to 8.
